# EUROPÄISCHE PATENTSCHRIFT

(11) **EP 0 969 582 B1**
(45) Veröffentlichungstag und Bekanntmachung des Hinweises auf die Patenterteilung: **24.01.2007**
(21) Anmeldenummer: 99810556.3
(22) Anmeldetag: 24.06.1999
(51) Int. Cl.: H02K 3/487

(54) **Elastisches Isolierstoffelement für die Verkeilung einer Wicklung, insbesondere der Statorwicklung einer elektrischen Maschine**
Elastic isolating element for wedging a coil, in particular an electric machine stator coil
Elément élastique isolant pour caler un bobinage, en particulier un bobinage de stator de machine électrique

(30) Priorität: 02.07.1998 DE 19829578
(43) Veröffentlichungstag der Anmeldung: 05.01.2000
(73) Patentinhaber: Alstom Technology Ltd, 5400 Baden (CH)
(72) Erfinder: Baumann, Thomas, Dr., 5430 Wettingen (CH); Joho, Reinhard, 5024 Küttigen (CH); Oesterheld, Jörg, 5442 Fislisbach (CH)

(56) Entgegenhaltungen:
- DE-A- 1 953 386
- DE-A- 2 123 520
- US-A- 4 200 818
- US-A- 5 598 049
- PATENT ABSTRACTS OF JAPAN vol. 004, no. 162 (E-033), 12. November 1980 (1980-11-12) & JP 55 109148 A (NIPPON RIKA KOGYOSHO:KK), 22. August 1980 (1980-08-22)
- PATENT ABSTRACTS OF JAPAN vol. 4, no. 170 (E-35) [652], 22. November 1980 (1980-11-22) & JP 55 117448 A (MITSUBISHI), 9. September 1980 (1980-09-09)

## Beschreibung

### TECHNISCHES GEBIET

Die vorliegende Erfindung bezieht sich auf das Gebiet der Technik rotierender elektrischer Maschinen. Sie betrifft ein elastisches Isolierstoffelement für die Verkeilung einer Wicklung, insbesondere der Statorwicklung, einer elektrischen Maschine in den dafür vorgesehenen Nuten eines Blechkörpers.

Ein solches Isolierstoffelement ist z.B. aus der Druckschrift US-A-3,949,255 oder US-A-4,200,816 bekannt.

### STAND DER TECHNIK

Elastische Isolierstoffelemente finden insbesondere in den Statoren von rotierenden elektrischen Maschinen zur elastischen Befestigung (Verkeilung) der Statorwicklung in den Nuten des Blechkörpers Verwendung. Die Statorwicklungen sind in der Regel isolierte Leiterbündel mit rechteckigem Querschnitt, die mit geringem Spiel in die Nuten des Statorkörpers eingelegt sind. Um einen festen Sitz der Wicklung in der Nut zu gewährleisten, muss die Verkeilung Beanspruchungen durch die Eigenmasse der Wicklung und durch elektromagnetische Kräfte im Betrieb und Kurzschlussfall in der Weise standhalten, dass keine Lockerung und Vibration der Wicklung möglich wird.

Konventionelle Nutverschlusskeile, insbesondere für kleinere Maschineneinheiten bestehen aus einem prismenförmig gearbeiteten bzw. bearbeiteten Isolierstoff. Als Isolierstoff wird in der Regel glasfaserverstärktes Epoxidharz verwendet (siehe z.B. die US-A-4,200,818). Unter Zuhilfenahme einer plastisch-elastischen Zwischenlage (Vlies, Filz) werden diese Keile axial in die Nuten der Blechpaket-Zahnköpfe und zum Teil in einem Imprägnierprozess mit der Wicklung und dem Blechkörper verklebt. Eine andere, konventionelle Keilkonstruktion beruht auf der Wirkungsweise von Doppelkeilen. Zwei übereinanderliegende Flachkeile werden in die Keilnuten eingeschoben, wobei die Vorspannkraft durch axiales Treiben des einen Flachkeils aufgebaut wird (siehe z.B. die US-A-3,949,255).

Nachteil beider Keilformen ist, dass die Keilkonstruktion in sich steif und unflexibel ist. Die Vorspannkraft ist undefiniert. Thermische Ausdehnungen der Nutfüllung führen wegen der steifen Verkeilung zu einer enormen Erhöhung der Druckkräfte auf die Nutfüllung, was zu einem sehr starken Setzen der Nutfüllung mit resultierender unerwünschter Lockerung der Wicklung führen kann.

Den Nachteil der unelastischen Verkeilung eliminiert eine Verkeilung mit Hilfe von Kunststoff-Wellfedern (US-A-3,949,255 oder auch DE-05 2123520). Dazu werden elastische Wellfedern zwischen einen steifen Keil und die Wicklung (oder zwischen zwei steife Keile) eingelegt. Die notwendige Vorspannkraft wird durch definiertes Zusammendrücken der Wellfeder erreicht. Ein Schwund der Nutfüllung durch Setzvorgänge wird durch das Nachfedern der Wellfeder kompensiert. Eine andere Lösung zur elastischen Verkeilung stellt die Verwendung elastischer Keile dar. Durch entsprechend dünne keile bzw. mittig ausgenommene Keile (Konvex-Konkav-Keile wie bei der US-A-5,598,049) wird die Flexibilität der Keile erhöht und die Vorspannkräfte werden reduziert. Auch mit dieser Lösung können Setzvorgänge bei der Nutfüllung in gewissem Rahmen ausgeglichen werden.

Die DE-OS 19 53 386 offenbart ein glasfaserverstärktes Kunstharzprofil, insbesondere einen Nutverschlusskeil für elektrische Maschinen, mit im Inneren des Nutverschlusskeils in Längsrichtung angeordneten Einlagen. Die Einlagen bestehen aus mindestens einem streifenförmigen, sich über die ganze Verschlusskeilbreite erstreckenden Band hoher Querbiegefestigkeit, sind beispielsweise aus antimagnetischem Stahl hergestellt und weisen Perforationen auf.

Eine dauerhafte Aufrechterhaltung der Mindestvorspannkraft ist bei diesen elastischen Verkeilmethoden nur gesichert, wenn die elastischen Kunststoffelemente ihre elastischen Eigenschaften auch vollständig beibehalten, bekannt ist jedoch, dass alle verstärkten Kunststoffe unter Dauerbiege-Beanspruchung und insbesondere erhöhten Temperaturen zum Fliessen bzw. Kriechen neigen. Wie aufwendige Untersuchungen gezeigt haben, sind nennenswerte Fliessvorgänge bereits bei üblichen Betriebstemperaturen zu erwarten, selbst wenn faserverstärkte Kunststoffe mit warmfesten Bindemitteln eingesetzt werden. Im Falle von Betriebsstörungen mit kurzzeitig weiter erhöhten Temperaturen können derartige Fliessvorgänge kritisch werden, so dass mit einer Lockerung der Wicklung zu rechnen ist.

### DARSTELLUNG DER ERFINDUNG

Es ist daher Aufgabe der Erfindung, ein Isolierstoffelement für die Verkeilung von Wicklungen zu schaffen, bei welchem ein Fliessen/Kriechen des Isolierstoffes bzw. die Auswirkungen eines Fliessens/Kriechens des Isolierstoffes auf das elastische Verhalten der Verkeilung sicher vermieden werden kann.

Die Aufgabe wird bei einem Isolierstoffelement der eingangs genannten Art dadurch gelöst, dass das Isolierstoffelement einen streifenförmigen Metallfederkern aufweist, welcher allseitig von einer Umhüllung aus einem Isolierstoff umgeben ist, wobei der Metallfederkern Mittel aufweist, durch welche im Metallfederkern induzierte Wirbelströme begrenzt werden. Hierdurch wird verhindert, dass durch die hohe Luftspalt-Induktion in der Maschine starke Wirbelströme mit den entsprechenden thermischen Auswirkungen in den Elementen angeregt werden. Dazu umfassen die Mittel schlitzförmige Einschnitte, welche in der Längsrichtung des Metallfederkerns verteilt angeordnet jeweils von den Längskanten des Metallfederkerns ausgehend in das Innere des Metallfederkerns hineinragen. Durch das Vorsehen der Einschnitte wird der Metallfederkern in einzelne Sektoren unterteilt. Damit wird erreicht, dass mögliche Schleifen, in denen Wirbelströme fliessen können, auf elektrisch und thermisch unkritische geometrische Ausmasse begrenzt werden. Die Schlitzung ist dabei so anzuordnen, dass die mechanische Federwirkung des Metallfederkerns optimal bleibt. Dies kann beispielsweise dadurch erreicht werden, dass die Einschnitte alternierend von den gegenüberliegenden Längskanten des Metallfederkerns in das Innere des Metallfederkerns hineinragen, und dass die von den unterschiedlichen Längskanten ausgehenden Einschnitte im Inneren des Metallfederkerns überlappen.

Die Umhüllung des erfindungsgemässen Isolierstoffelementes besteht vorzugsweise aus einem faserverstärkten Kunststoff, insbesondere einem Hochtemperatur-Duromer oder Hochtemperatur-Thermoplast. Hierdurch wird erreicht, dass das Setzen des Umhüllungs- bzw. Einbettungsmaterials unter Druckbeanspruchung vernachlässigbar klein ist.

Um eine Delamination durch Schubspannungen zu vermeiden, sind gemäss einer weiteren bevorzugten Ausführungsform zusätzliche Mittel zur Verbesserung der mechanischen Verbindung zwischen dem Metallfederkern und der Umhüllung vorgesehen. Hierzu kommt einerseits in Betracht, dass der Metallfederkern mit einem Haftvermittler vorbehandelt ist. Andererseits kann als zusätzliches Mittel zur Verbesserung der mechanischen Verbindung der Metallfederkern mit verteilt angeordneten Bohrungen versehen sein. Zusätzlich zu einer guten Verklebung wird aber auch durch die wegen der Wirbelströme vorgesehenen Einschnitte (Schlitze) im Metallfederkern aufgrund der resultierenden formschlüssigen Verbindung mit dem Einbettungsmaterial eine gleichmässige Krafteinleitung sichergestellt.

Das erfindungsgemässe Isolierstoffelement kann wahlweise sowohl als Nutverschlusskeil als auch als Wellfeder ausgebildet sein, und alleine als Nutverschlusskeil oder als Wellfeder oder in einer Kombination aus Nutverschlusskeil und Wellfeder eingesetzt werden.

Ist das Element als Nutverschlusskeil ausgebildet, kann es vorzugsweise auf der Unterseite ein konkaves bzw. auf der Oberseite ein konvexes Querschnittsprofil aufweisen. Hierdurch können die elastischen mechanischen Eigenschaften positiv beeinflusst werden.

Ist das Element als Wellfeder ausgebildet, ist der Metallfederkern gewellt ausgebildet. Die Wellen schliessen dabei vorzugsweise mit der Längsrichtung der Wellfeder einen Winkel von kleiner 90°, insbesondere etwa 45°, ein. Ist der Metallfederkern aus einem Streifen mit geraden Längskanten geformt, und sind zur Begrenzung der Wirbelströme im Metallfederkern Einschnitte vorgesehen, verlaufen die Einschnitte im wesentlichen senkrecht zu den Wellen, wodurch gleichzeitig optimale elastische und elektrische Eigenschaften der Wellfeder erreicht werden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Querschnitt eine bevorzugte Ausführungsform eines Isolierstoffelementes nach der Erfindung in der Gestalt eines Nutverschlusskeiles;
- Fig. 2: in der teilweise geschnittenen Draufsicht einen Nutverschlusskeil gemäss Fig. 1 mit überlappenden (mäanderförmigen) Einschnitten zur Verminderung von Wirbelströmen:
- Fig. 3: einen zu Fig. 2 vergleichbaren Nutverschlusskeil mit nicht überlappenden Einschnitten;
- Fig. 4: einen zu Fig. 2 vergleichbaren Nutverschlusskeil mit paarweise zugeordneten (fischgrätenförmigen) Einschnitten und zusätzlichen Bohrungen zur verbesserten formschlüssigen Verbindung zwischen Metallfederkern und Umhüllung;
- Fig. 5: in einer zu Fig. 1 vergleichbaren Darstellung einen Nutverschlusskeil nach der Erfindung mit konvex-konkaver Umhüllung zur Veränderung der mechanischen Eigenschaften;
- Fig. 6: die Draufsicht auf den Nutverschlusskeil aus Fig. 5 gemäss Fig. 2;
- Fig. 7: In der teilweise geschnittenen Draufsicht ein erstes bevorzugtes Ausführungsbeispiel eines Isolierstoffelementes nach der Erfindung in der Gestalt einer Wellfeder mit Einschnitten;
- Fig. 8: die Wellfeder nach Fig. 7 in der Seitenansicht; und
- Fig. 9: In der teilweise geschnittenen Draufsicht ein zweites bevorzugtes Ausführungsbeispiel eines Isolierstoffelementes nach der Erfindung in der Gestalt einer Wellfeder mit einem mäanderförmig gewellten Metallfederkern.

### WEGE ZUR AUSFÜHRUNG DER ERFINDUNG

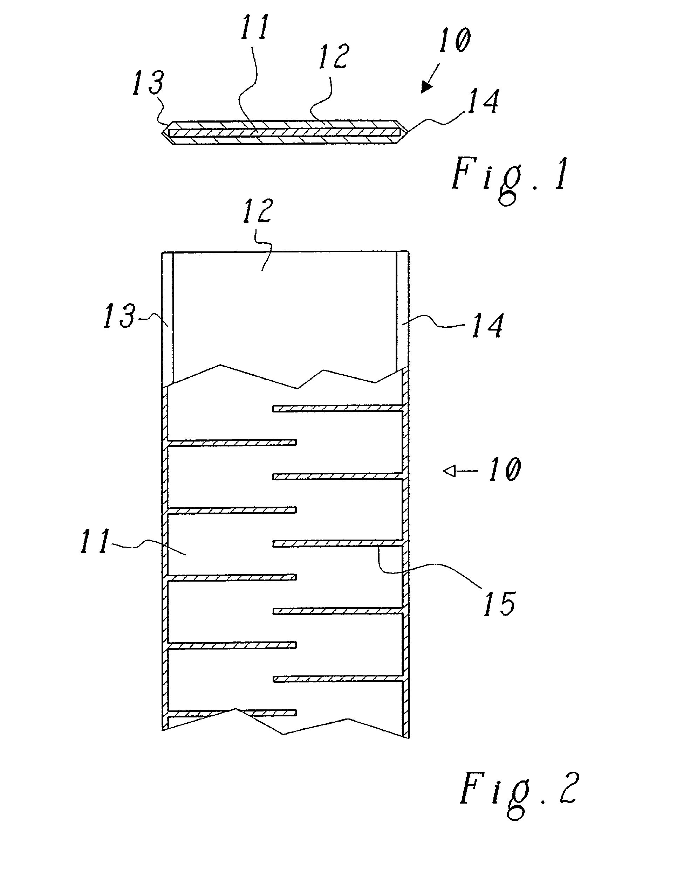

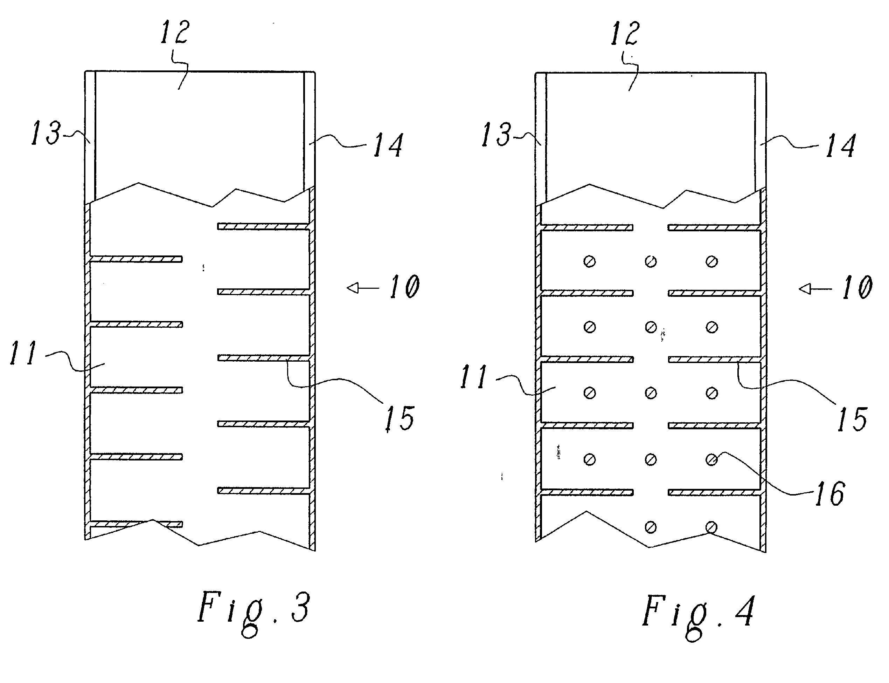

Fig. 1 und 2 zeigen im Querschnitt und in einer teilweise geschnittenen Draufsicht ein erstes bevorzugtes Ausführungsbeispiel eines Isolierstoffelements nach der Erfindung in der Gestalt eines Nutverschlusskeiles 10. Der Nutverschlusskeil 10 ist als flacher, länglicher Streifen ausgebildet und seitlich durch zwei V-förmig geformte Längsseiten 13, 14 begrenzt, so dass sich insgesamt ein prismatisches Querschnittsprofil (Fig. 1) ergibt, wie es für Nutverschlusskeile üblich und charakteristisch ist. Der Nutverschlusskeil 10 umfasst einen Metallfederkern 11 in Form eines Blechstreifens, der allseitig von einer Umhüllung 12 aus Isolierstoff umgeben ist, die einen direkten Kontakt des Kerns mit dem laminierten Blechkörper des Stators und damit vagabundierende Blechströme mit lokalen Hot-Spots und der Gefahr von massiven Blechschlüssen verhindert. Der Metallfederkern 11 hat vorzugsweise einen einfachen rechteckigen Querschnitt und hat eine Dicke von mehreren Millimetern, insbesondere im Bereich von 2 bis 3 mm. Er besteht vorzugsweise aus einem temperaturbeständigen nichtmagnetischen Metall mit Federeigenschaften, beispielsweise einem Edelstahl. Die Umhüllung 12 hat nicht nur eine isolierende Funktion, sondern dient gleichzeitig dazu, dem Nutverschlusskeil 10 durch entsprechende Formung auf einfache Art und Weise das notwendige prismatische Querschnittsprofil zu geben.

Der Metallfederkern 11 wird in die Umhüllung 12 aus einem glasfaserverstärkten Kunststoff eingebettet. Als Bindemittel eignen sich dazu alle Duromere wie auch Thermoplaste, die je nach vorgesehenem Temperaturbereich sinnvoll auszuwählen sind. Zu beachten ist, dass der Kunststoff in dieser Anwendung funktionell nur noch zur Isolierung der Metallfederkerns und eventuell zusätzlich zur (z.B. prismatischen) Formgebung des Nutverschlusskeils 10 notwendig ist. Sein Beitrag zum mechanischen Verhalten des Bauteils dagegen ist höchstens marginal. Es ist jedoch darauf zu achten, dass das Setzen des Einbettungsmaterials unter Druckbeanspruchung vernachlässigbar klein sein sollte, weswegen unverstärkte Kunststoffe für diesen Zweck weniger geeignet erscheinen. Bei der Wahl des faserverstärkten Kunststoffes für die Umhüllung 12 und der Vorbehandlung des Metallfederkerns 11 (z.B. durch Einsatz eines Haftvermittlers) ist auf eine gute Grenzflächenhaftung (Verklebung) zu achten, um Delaminationen durch Schubspannungen zu vermeiden.

Neben der elektrischen Isolierung des Metallfederkerns 11 muss zusätzlich darauf geachtet werden, dass durch die am Einsatzort herrschende hohe Luftspalt-Induktion keine starken Wirbelströme mit den entsprechenden thermischen Auswirkungen im Metallfederkern 11 angeregt werden. Dies wird dadurch erreicht, dass der Metallfederkern 11 nicht durchgehend massiv ausgebildet ist, sondern gemäss Fig. 2 durch alternierend angeordnete, von den Längskanten 13, 14 ins Innere verlaufende und sich im Inneren überlappende Einschnitte 15 in einzelne Sektoren unterteilt werden, die mäanderförmig zusammenhängen. Damit wird erreicht, dass mögliche Schleifen, in denen Wirbelströme fliessen können, auf elektrisch und thermisch unkritische geometrische Ausmasse begrenzt werden. Die mit den Einschnitten 15 verbundene Schlitzung ist dabei so anzuordnen, dass die mechanische Federwirkung des Metallfederkerns 11 optimal erhalten bleibt.

Anstelle der in Fig. 2 gezeigten Schlitzung mit den im Inneren des Metallfederkerns 11 überlappenden Einschnitten 15 sind selbstverständlich auch andere Anordnungen der Einschnitte 15 denkbar. Bei dem in Fig. 3 dargestellten Ausführungsbeispiel sind die Einschnitte 15 zwar auch alternierend angeordnet, überlappen sich jedoch nicht. Hierdurch ergibt sich ein etwas anderes mechanisches Verhalten des Bauteils. Der innere Aufbau des Nutverschlusskeils 10 aus Fig. 3 ist dabei im Querschnitt derselbe wie beim Ausführungsbeispiel aus Fig. 1.

Eine weitere Ausführungsform der Schlitzung bei ansonsten gleichem inneren Aufbau ist in Fig. 4 wiedergegeben. Hier liegen sich die Einschnitte 15 von den beiden Längskanten 13, 14 ausgehend paarweise gegenüber und bilden so ein fischgrätenförmiges Einschnittmuster. Zusätzlich zu den Einschnitten 15 sind bei diesem Ausführungsbeispiel in den zwischenliegenden Sektoren noch Bohrungen 16 verteilt angeordnet. Hiermit wird die formschlüssige Verbindung zwischen dem Metallfederkern 11 und dem Einbettungsmaterial der Umhüllung 12 zusätzlich zu den bereits vorhandenen Einschnitten 15 noch weiter verbessert. Anstelle der Bohrungen 16 können zu diesem Zweck selbstverständlich auch andere Arten von regelmässig oder unregelmässig geformten Ausnehmungen vorgesehen werden.

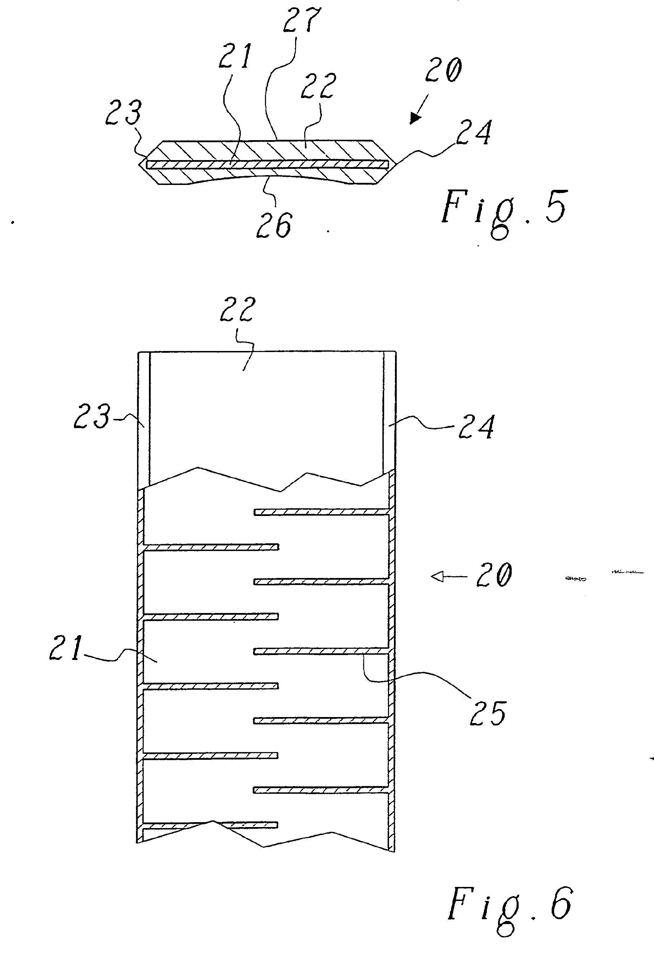

Bei einem anderen, in Fig. 5 und 6 dargestellten, Ausführungsbeispiel eines Nutverschlusskeils 20 wird für den Metallfederkern 21 zwar die Form und Schlitzung (Einschnitte 25) des Metallfederkerns 11 aus Fig. 2 übernommen, jedoch wird das Querschnittsprofil der Umhüllung 22 gemäss Fig. 5 dahingehend verändert, dass die Umhüllung 22 insgesamt dicker ausgebildet ist, dafür aber auf der Unterseite 26 konkav bzw. auf der Oberseite 27 konvex ausgebildet ist. Durch eine derartige konvex-konkave Ausbildung des Keils wird bei vorgegebener Dicke insgesamt die Flexibilität erhöht und die Vorspannkraft reduziert.

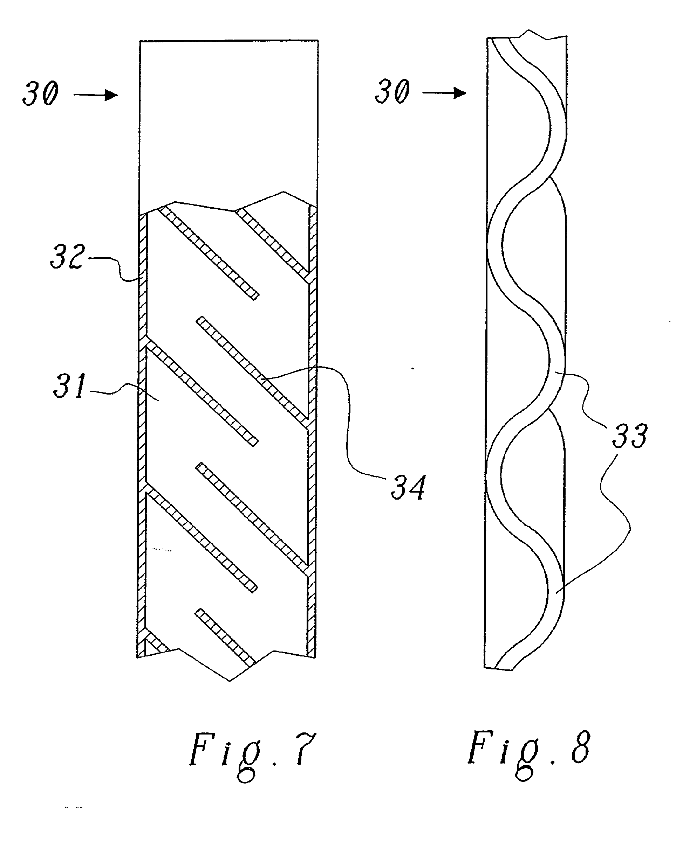

Die in den Fig. 7 bis 9 dargestellten Ausführungsbeispiele des Isolierstoffelementes nach der Erfindung beziehen sich auf die Gestaltung als Wellfeder 30 bzw. 40, die zusammen mit entsprechenden Nutverschlusskeilen zur elastischen Verkeilung der Wicklung eingesetzt werden können. Die Wellfeder 30 aus Fig. 7 und 8 umfasst einen mit einer Wellung versehenen Metallfederkern 31, der wiederum von einer Umhüllung 32 aus faserverstärktem Isolierstoff (Hochtemperatur-Epoxy) umgeben ist, der gewellte Metallfederkern 31 wird mit je einem Glas-Duromer-Prepreg auf der Ober- und Unterseite zu einem Sandwich zusammengefügt und anschliessend in einer entsprechenden Wellenform ausgehärtet. Die resultierende Wellfeder 30 hat die in der Seitenansicht von Fig. 8 erkennbare Wellung mit Wellen 33, die mit der Längsrichtung der Wellfeder 30 einen Winkel von kleiner 90°, vorzugsweise etwa 45°, einschliessen. Die Schlitzung mit den alternierenden und überlappenden Einschnitten 34 ist ebenfalls schiefwinklig zur Längsachse orientiert, derart, dass die Einschnitte 34 senkrecht zur Richtung der Wellen 33 stehen.

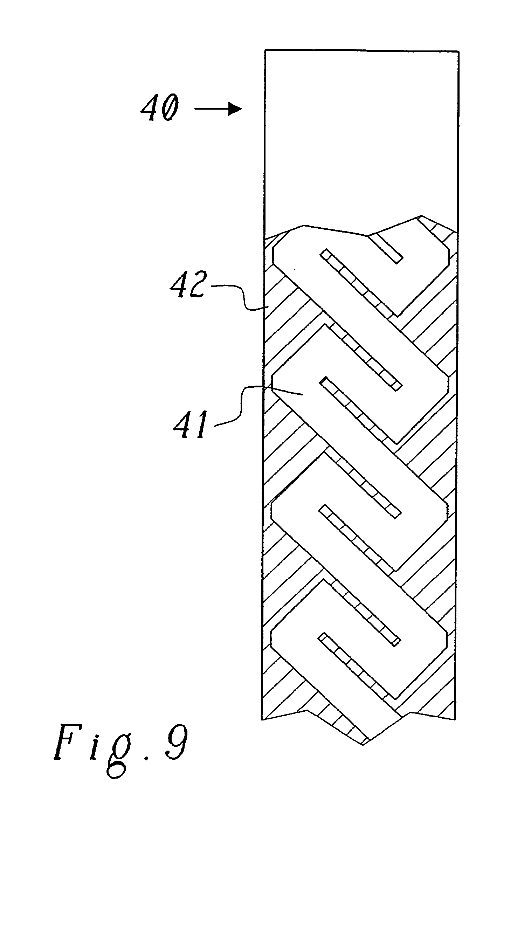

Während die Wirbelströme bei dem Beispiel der Fig. 7 durch entsprechende Einschnitte 34 in einem ursprünglich durchgehenden streifenförmigen Metallfederkern 31 begrenzt werden, wird beim Ausführungsbeispiel der Fig. 9 die Wellfeder 40 durch einen Metallfederkern 41 in der Umhüllung 42 gegen hohe Wirbelströme gerüstet, der als mäanderförmig gewellter Streifen ausgebildet ist, wobei die mäanderförmige Wellung mit der Längsrichtung der Wellfeder 40 einen Winkel von kleiner 90°, vorzugsweise etwa 45°, einschliesst. Die Wellen der Wellfeder 40 sind dabei in der gleichen Weise ausgebildet und orientiert, wie die Wellen 33 der Wellfeder 30 aus Fig. 7, 8. Es versteht sich jedoch von selbst, dass im Rahmen der Erfindung der Metallfederkern, die Schlitzung und die Umhüllung die unterschiedlichsten Gestaltungen annehmen können, sofern die gewünschten mechanischen bzw. Federeigenschaften erhalten werden, die Isolierung des Kerns gewährleistet ist, und die Wirbelströme und damit verbundenen thermischen Belastungen auf ein tolerierbares Mass beschränkt werden können.

### BEZUGSZEICHENLISTE

- 10: Nutverschlusskeil
- 11: Metallfederkern
- 12: Umhüllung (Isolierstoff)
- 13,14: Längskante
- 15: Einschnitt (schlitzförmig)
- 16: Bohrung
- 20: Nutverschlusskeil
- 21: Metallfederkern
- 22: Umhüllung (Isolierstoff)
- 23,24: Längskante
- 25: Einschnitt (schlitzförmig)
- 26: Unterseite (konkaves Querschnittsprofil)
- 27: Oberseite (konvexes Querschnittsprofil)
- 30,40: Wellfeder
- 31,41: Metallfederkern
- 32,42: Umhüllung (Isolierstoff)
- 33: Welle
- 34: Einschnitt (schlitzförmig)

## Patentansprüche

1. Elastisches Isolierstoffelement für die Verkeilung einer Wicklung, insbesondere der Statorwicklung, einer elektrischen Maschine in den dafür vorgesehenen Nuten eines Blechkörpers, wobei das lsolierstoffelement (10, 20, 30, 40) einen streifenförmigen Metallfederkern (11, 21, 31, 41) aufweist, welcher allseitig von einer Umhüllung (12, 22, 32, 42) aus einem Isolierstoff umgeben ist, **dadurch gekennzeichnet, dass** der Metallfederkern (11, 21, 31) Mittel aufweist, durch welche im Metallfederkern (11, 21, 31) induzierte Wirbelströme begrenzt werden wobei die Mittel schlitzförmige Einschnitte (15, 25, 34) umfassen, welche in der Längsrichtung des Metallfederkerns (11, 21, 31) verteilt angeordnet sind und jeweils von den Längskanten des Metallfederkerns (11, 21, 31) ausgehend in das Innere des Metallfederkerns (11, 21, 31) hineinragen.

2. Isolierstoffelement nach Anspruch 1, **dadurch gekennzeichnet, dass** der Metallfederkern (11, 21, 31, 41) aus einem nichtmagnetischen, federnden Metall, vorzugsweise einem Edelstahl, besteht.

3. Isolierstoffelement nach einem der Ansprüche 1 und 2, **dadurch gekennzeichnet, dass** der Metallfederkern (11, 21, 31, 41) eine Dicke von wenigen Millimetern, vorzugsweise zwischen 2 und 3 mm, aufweist.

4. Isolierstoffelement nach Anspruch 1, **dadurch gekennzeichnet, dass** die Einschnitte (15, 25, 34) alternierend von den gegenüberliegenden Längskanten des Metallfederkerns (11, 21, 31) in das Innere des Metallfederkerns (11, 21, 31) hineinragen.

5. Isolierstoffelement nach Anspruch 4, **dadurch gekennzeichnet, dass** die von den unterschiedlichen Längskanten ausgehenden Einschnitte (15, 21, 34) im Inneren des Metallfederkerns (11, 21, 31) überlappen.

6. Isolierstoffelement nach Anspruch 3, **dadurch gekennzeichnet, dass** die von den gegenüberliegenden Längskanten ausgehenden Einschnitte (15) sich paarweise gegenüberliegen.

7. Isolierstoffelement nach einem der Ansprüche 1 bis 6, **dadurch gekennzeichnet, dass** die Umhüllung (12, 22, 32, 42) aus einem faserverstärkten Kunststoff, insbesondere einem Hochtemperatur-Duromer oder Hochtemperatur-Thermoplast, besteht.

8. Isolierstoffelement nach Anspruch 7, **dadurch gekennzeichnet, dass** zusätzliche Mittel zur Verbesserung der mechanischen Verbindung zwischen dem Metallfederkern (11, 21, 31, 41) und der Umhüllung (12, 22, 32, 42) vorgesehen sind.

9. Isolierstoffelement nach Anspruch 8, **dadurch gekennzeichnet, dass** als zusätzliches Mittel zur Verbesserung der mechanischen Verbindung der Metallfederkern (11, 21, 31, 41) mit einem Haftvermittler vorbehandelt ist.

10. Isolierstoffelement nach Anspruch 8, **dadurch gekennzeichnet, dass** als zusätzliches Mittel zur Verbesserung der mechanischen Verbindung der Metallfederkern (11) mit verteilt angeordneten Bohrungen (16) versehen ist.

11. Isolierstoffelement nach einem der Ansprüche 1 bis 10, **dadurch gekennzeichnet, dass** das Isolierstoffelement als Nutverschlusskeil (10, 20) ausgebildet ist.

12. Isolierstoffelement nach Anspruch 11, **dadurch gekennzeichnet, dass** der Nutverschlusskeil (20) auf der Unterseite (26) ein konkaves bzw. auf der Oberseite (27) ein konvexes Querschnittsprofil aufweist.

13. Isolierstoffelement nach einem der Ansprüche 1 bis 10, **dadurch gekennzeichnet, dass** das Isolierstoffelement als Wellfeder (30, 40) ausgebildet ist.

14. Isolierstoffelement nach Anspruch 13, **dadurch gekennzeichnet, dass** der Metallfederkern (31, 41) gewellt ausgebildet ist, und dass die Wellen (33) mit der Längsrichtung der Wellfeder (30, 40) einen Winkel von kleiner 90°, vorzugsweise etwa 45°, einschliessen.

15. Isolierstoffelement nach Anspruch 14, **dadurch gekennzeichnet, dass** der Metallfederkern (31) aus einem Streifen mit geraden Längskanten geformt ist, dass zur Begrenzung der Wirbelströme im Metallfederkern (31) Einschnitte (34) vorgesehen sind, und dass die Einschnitte im wesentlichen senkrecht zu den Wellen (33) verlaufen.

16. Isolierstoffelement nach Anspruch 14, **dadurch gekennzeichnet, dass** der Metallfederkern (41) als mäanderförmig gewellter Streifen ausgebildet ist, und die mäanderförmige Wellung mit der Längsrichtung der Wellfeder (40) einen Winkel von kleiner 90°, vorzugsweise etwa 45°, einschliesst.

17. Anwendung eines Isolierstoffelementes nach einem der Ansprüche 1 bis 16 in Form eines Nutverschlusskeiles (10, 20) und/oder in Form einer Wellenfeder (30, 40) zum elastischen Verkeilen der Wicklung einer elektrischen Maschine in der dafür vorgesehenen Nut eines Blechpaketes.

## Claims

1. Elastic insulating element for wedging a winding, particularly the stator winding, of an electrical machine in the slots of a laminated body, provided for this purpose, wherein the insulating element (10,20,30,40) has a strip-shaped metal spring core (11,21,31,41) which is surrounded on all sides by a sheathing (12,22,32,42) of an insulating material, **characterized in that** the metal spring core (11,21,31) has means by means of which eddy currents induced in the metal spring core (11,21,31) are limited, wherein the means comprise slot-shaped indentations (15,25,34) which are arranged distributed in the longitudinal direction of the metal spring core (11,21,31) and in each case protrude into the interior of the metal spring core (11,21,31) coming from the longitudinal edges of the metal spring core (11,21,31).

2. Insulating element according to Claim 1, **characterized in that** the metal spring core (11,21,31,41) consists of a nonmagnetic elastic metal, preferably of a stainless steel.

3. Insulating element according to one of Claims 1 and 2, **characterized in that** the metal spring core (11,21,31,41) has a thickness of a few millimetres, preferably between 2 and 3 mm.

4. Insulating element according to Claim 1, **characterized in that** the indentations (15,25,34) protrude into the interior of the metal spring core (11,21,31) alternatingly from the opposite longitudinal edges of the metal spring core (11,21,31).

5. Insulating element according to Claim 4, **characterized in that** the indentations (15,21,34) coming from the different longitudinal edges overlap in the interior of the metal spring core (11,21,31).

6. Insulating element according to Claim 3, **characterized in that** the indentations (15) coming from the opposite longitudinal edges are opposite one another in pairs.

7. Insulating element according to one of Claims 1 to 6, **characterized in that** the sheathing (12,22,32,42) consists of a fibre-reinforced plastic, particularly a high-temperature thermosetting plastic or high-temperature thermoplastic.

8. Insulating element according to Claim 7, **characterized in that** additional means for improving the mechanical connection between the metal spring core (11,21,31,41) and the sheathing (12,22,32,42) are provided.

9. Insulating element according to Claim 8, **characterized in that** the metal spring core (11,21,31,41) is pretreated with a bonding agent as additional means for improving the mechanical connection.

10. Insulating element according to Claim 8, **characterized in that** the metal spring core (11) is provided with holes (16) arranged in distributed manner as additional means for improving the mechanical connection.

11. Insulating element according to one of Claims 1 to 10, **characterized in that** the insulating element is constructed as slot wedge (10,20).

12. Insulating element according to Claim 11, **characterized in that** the slot wedge (20) has a concave cross-sectional profile on its underside (26) and a convex cross-sectional profile on its top (27).

13. Insulating element according to one of Claims 1 to 10, **characterized in that** the insulating element is constructed as undulating spring (30,40).

14. Insulating element according to Claim 13, **characterized in that** the metal spring core (31,41) is constructed to be undulating and **in that** the waves (33) enclose an angle of less than 90°, preferably about 45°, with the longitudinal direction of the undulating spring (30,40).

15. Insulating element according to Claim 14, **characterized in that** the metal spring core (31) is formed of a strip with straight longitudinal edges, that indentations (34) are provided for limiting the eddy currents in the metal spring core (31), and **in that** the indentations extend essentially perpendicularly to the waves (33).

16. Insulating element according to Claim 14, **characterized in that** the metal spring core (41) is constructed as a meander-shaped undulating strip and the meander-shaped undulation encloses an angle of less than 90°, preferably about 45°, with the longitudinal direction of the undulating spring (40).

17. Application of an insulating element according to one of Claims 1 to 16 in the form of a slot wedge (10,20) and/or in the form of an undulating spring (30,40) for elastically wedging the winding of an electrical machine in the slot of a laminated stack, provided for this purpose.

## Revendications

1. Elément élastique isolant pour caler un bobinage, en particulier le bobinage de stator, d'une machine électrique dans les encoches d'un corps feuilleté prévues à cet effet, dans lequel l'élément isolant (10, 20, 30, 40) comporte un noyau élastique métallique en forme de bande (11, 21, 31, 41), qui est entouré sur tous les côtés par une gaine (12, 22, 32, 42) en une matière isolante, **caractérisé en ce que** le noyau élastique métallique (11, 21, 31) comprend des moyens permettant de limiter les courants de Foucault induits dans le noyau élastique métallique (11, 21, 31), dans lequel les moyens comportent des entailles en forme de fentes (15, 25, 34) qui sont réparties dans la direction longitudinale du noyau élastique métallique (11, 21, 31), et qui pénètrent à l'intérieur du noyau élastique métallique (11, 21, 31) en partant chaque fois des arêtes longitudinales du noyau élastique métallique (11, 21, 31).

2. Elément isolant selon la revendication 1, **caractérisé en ce que** le noyau élastique métallique (11, 21, 31, 41) se compose d'un métal élastique non magnétique, de préférence d'un acier spécial.

3. Elément isolant selon l'une quelconque des revendications 1 et 2, **caractérisé en ce que** le noyau élastique métallique (11, 21, 31, 41) présente une épaisseur de quelques millimètres, comprise de préférence entre 2 et 3 mm.

4. Elément isolant selon la revendication 1, **caractérisé en ce que** les entailles (15, 25, 34) pénètrent à l'intérieur du noyau élastique métallique (11, 21, 31) en alternance à partir des arêtes longitudinales opposées du noyau élastique métallique (11, 21, 31).

5. Elément isolant selon la revendication 4, **caractérisé en ce que** les entailles (15, 25, 34) partant des arêtes longitudinales différentes se chevauchent à l'intérieur du noyau élastique métallique (11, 21, 31).

6. Elément isolant selon la revendication 3, **caractérisé en ce que** les entailles (15) partant des arêtes longitudinales opposées sont opposées par paires.

7. Elément isolant selon l'une quelconque des revendications 1 à 6, **caractérisé en ce que** la gaine (12, 22, 32, 42) se compose d'un plastique renforcé par des fibres, en particulier d'un duromère pour haute température ou d'un thermoplastique pour haute température.

8. Elément isolant selon la revendication 7, **caractérisé en ce qu'**il est prévu des moyens supplémentaires pour améliorer la liaison mécanique entre le noyau élastique métallique (11, 21, 31, 41) et la gaine (12, 22, 32, 42).

9. Elément isolant selon la revendication 8, **caractérisé en ce que** le noyau élastique métallique (11, 21, 31, 41) est prétraité avec un agent adhésif comme moyen supplémentaire pour améliorer la liaison mécanique.

10. Elément isolant selon la revendication 8, **caractérisé en ce que** le noyau élastique métallique (11) est pourvu de trous répartis (16) comme moyen supplémentaire pour améliorer la liaison mécanique.

11. Elément isolant selon l'une quelconque des revendications 1 à 10, **caractérisé en ce que** l'élément isolant est réalisé sous la forme d'une cale d'encoche (10, 20).

12. Elément isolant selon la revendication 11, **caractérisé en ce que** la cale d'encoche (20) présente sur la face inférieure (26) un profil transversal concave ou sur la face supérieure (27) un profil transversal convexe.

13. Elément isolant selon l'une quelconque des revendications 1 à 10, **caractérisé en ce que** l'élément isolant est réalisé sous la forme d'un ressort ondulé (30, 40).

14. Elément isolant selon la revendication 13, **caractérisé en ce que** le noyau élastique métallique (31, 41) est ondulé et **en ce que** les ondes (33) forment avec la direction longitudinale du ressort ondulé (30, 40) un angle inférieur à 90°, de préférence d'environ 45°.

15. Elément isolant selon la revendication 14, **caractérisé en ce que** le noyau élastique métallique (31) est formé à partir d'une bande avec des arêtes longitudinales droites, **en ce qu'**il est prévu des entailles (34) pour limiter les courants de Foucault dans le noyau élastique métallique (31), et **en ce que** les entailles sont sensiblement perpendiculaires aux ondes (33).

16. Elément isolant selon la revendication 14, **caractérisé en ce que** le noyau élastique métallique (41) est réalisé sous la forme d'une bande ondulée en forme de méandres, et **en ce que** l'ondulation en forme de méandres forme avec la direction longitudinale du ressort ondulé (40) un angle inférieur à 90°, de préférence d'environ 45°.

17. Application d'un élément isolant selon l'une quelconque des revendications 1 à 16 sous la forme d'une cale d'encoche (10, 20) et/ou sous la forme d'un ressort ondulé (30, 40) pour le calage élastique du bobinage d'une machine électrique dans l'encoche d'un paquet de tôles prévue à cet effet.
